# EUROPÄISCHE PATENTSCHRIFT

(11) **EP 3 094 840 B1**
(45) Veröffentlichungstag und Bekanntmachung des Hinweises auf die Patenterteilung: **12.12.2018**
(21) Anmeldenummer: 14786663.6
(22) Anmeldetag: 20.10.2014
(51) Int. Cl.: F16H 19/00, F16K 11/16, F01P 7/14, F16K 31/53

(54) **DREHSCHIEBERANORDNUNG MIT EINER VERSTELLANORDNUNG**
ROTARY VALVE WITH AN ACTUATION SYSTEM
VANNE ROTATIVE AVEC SON DISPOSITIF D'ACTIONNEMENT

(30) Priorität: 17.01.2014 DE 102014200844
(43) Veröffentlichungstag der Anmeldung: 23.11.2016
(73) Patentinhaber: Volkswagen Aktiengesellschaft, 38440 Wolfsburg (DE)
(72) Erfinder: LÜDERS, Ralf, 31224 Peine (DE); FRIES, Holger, 38640 Goslar (DE)
(86) Internationale Anmeldenummer: PCT/EP2014/072424
(87) Internationale Veröffentlichungsnummer: WO 2015/106845

(56) Entgegenhaltungen:
- DE-A1-102006 059 029
- DE-A1-102009 020 187
- DE-B3-102007 019 064
- DE-B3-102009 010 947

## Beschreibung

Die Erfindung betrifft eine Drehschieberanordnung mit einer Verstellanordnung für einen erste und einen zweiten Drehschieber mit einem um eine erste Drehachse drehbaren, mit einer Antriebsradverzahnung versehenen Antriebsrad zum Antreiben eines um eine zweite Drehachse drehbaren, mit einer Abtriebsradverzahnung versehenen Abtriebsrads. Die beiden Drehachsen verlaufen im Wesentlichen parallel zueinander. Die Antriebsradverzahnung und die Abtriebsradverzahnung erstrecken sich dabei in Umfangsrichtung jeweils nur über einen Teilwinkelbereich.

Drehschieber können zum Einstellen eines fluiden Volumenstroms durch eine Durchströmungsöffnung verwendet werden. Hierzu weisen sie Querschnittsverstellglieder auf, die je nach ihrer Drehlage die Durchströmungsöffnung zum Einströmen/Ausströmen eines Fluids freigeben oder verschließen. Zu diesem Zweck können die Querschnittsverstellglieder selbst eine Öffnung aufweisen, die sich in einer Freigabestellung mit der Durchströmungsöffnung deckt und die Durchströmungsöffnung damit freigibt und in einer Verschlussstellung gegenüber der Durchströmungsöffnung verdreht ist und die Durchströmungsöffnung damit verschließt. Solche Drehschieber kommen insbesondere in Kühlmittelkreisläufen von Brennkraftmaschinen zum Einsatz, wo sie mehrere Zweige unabhängig oder abhängig voneinander öffnen und verschließen. Der Drehschieber kann ggf. über ein Getriebe von einer Antriebseinheit wie etwa einem Stellmotor angetrieben werden.

Kennfeldgesteuerte Kühlmittelregler benötigen häufig zwei oder mehr Drehschieber mit unterschiedlichem Bewegungsablauf, die von nur einer Antriebseinheit angetrieben werden. In diesem Fall kann der erste Drehschieber das Antriebsrad und der zweite Drehschieber das Abtriebsrad aufweisen, so dass eine Verdrehung des ersten Drehschiebers eine Verdrehung des zweiten Drehschiebers bewirkt. Das Antriebsrad und das Abtriebsrad können über ein Getriebe miteinander verbunden sein. Die eingangs genannte "Verstellanordnung" weist das Antriebsrad (treibendes Rad) und das von diesem über ein Getriebe antreibbare Abtriebsrad (getriebenes Rad) auf, wobei an das Antriebsrad und/oder an das Abtriebsrad ein Drehschieber angeschlossen bzw. anschließbar ist.

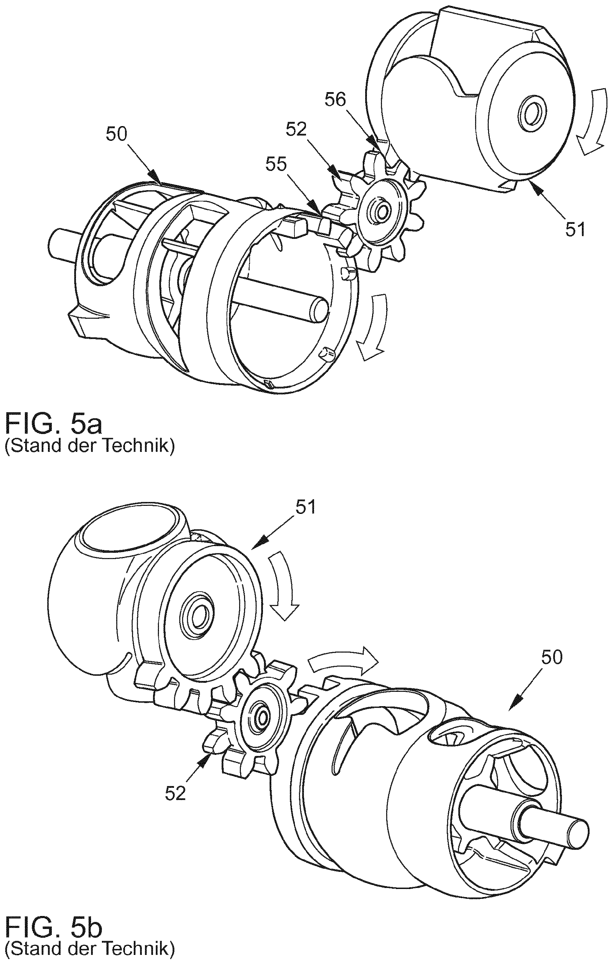

In Fig. 5 ist eine herkömmliche Verstellanordnung mit einem treibenden Rad 50 und einem davon antreibbaren, getriebenen Rad 51 dargestellt, wobei die Räder jeweils Teile eines Drehschiebers sind. Das treibende Rad 50 und das getriebene Rad 51 weisen eine Verzahnung 55, 56 auf, die sich in Umfangsrichtung über einen Teilwinkelbereich erstreckt. Ein Übertragungszahnrad 52 ist zwischen dem treibenden Rad 50 und dem getriebenen Rad 51 angeordnet und greift in die beiden Verzahnungsabschnitte 55, 56 ein. Ausgehend von einer in Fig. 5a dargestellten ersten Drehlage ist das treibende Rad 50 in Pfeilrichtung zum Antreiben des getriebenen Rads 51 in Pfeilrichtung mit dem Übertragungszahnrad 52 als Zwischenstufe verdrehbar. Wenn die in Fig. 5b dargestellte Arretierlage erreicht ist, bewirkt ein weiteres Verdrehen des treibenden Rads 50 in Pfeilrichtung keine Verstellung des getriebenen Rad 51 in Pfeilrichtung mehr. Vielmehr verbleibt das getriebene Rad 51 aufgrund einer Verdrehsicherung, die zwischen dem treibenden Rad 50 und dem Übertragungszahnrad 52 wirkt, in der in Fig. 5b dargestellten Arretierlage. Ein mit dem treibenden Rad 50 verbundener erster Drehschieber kann so unabhängig von einem mit dem getriebenen Rad 51 verbundenen zweiten Drehschieber verstellt werden.

Eine Verstellanordnung mit ähnlicher Funktionsweise ist in der Druckschrift DE 10 2009 020 187 A1 beschrieben.

In der Druckschrift DE 10 2009 010 947 B3 ist eine Verstellanordnung beschrieben, bei der die Drehachse des Antriebsrads unter einem Winkel zu der Drehachse des Abtriebsrads verläuft. Diese Verstellanordnung ist für spezielle räumliche Geometrien geeignet, da die Drehschieber hier gegenseitig sehr kompakt und bauraumsparend angeordnet werden können, sie ist aber andererseits besonders wartungsintensiv und anfällig für Fehlfunktionen. Ferner ist diese Verstellanordnung für reguläre Geometrien mit parallel zueinander verlaufenden Drehachsen nicht geeignet.

Die Druckschrift DE 10 2007 019 064 B3 zeigt eine Verstellanordnung, bei der die Drehachse des treibenden Rads mit der Drehachse des getriebenen Rads zusammenfällt. Ein Übertragungszahnrad greift von radial außen in einander gegenüberliegende Mitnahmeelemente des treibenden und des getriebenen Rads zum Antreiben des getriebenen Rads ein.

In der DE 10 2006 059 029 A1 ist ein Drehschieber mit mehreren Querschnittsverstellgliedern beschrieben, wobei die Querschnittsverstellglieder jeweils über ein Drehgetriebe mit einer gemeinsamen Antriebswelle in Verbindung stehen.

Der Montage- und Wartungsaufwand ist bei den beschriebenen Verstellanordnungen allerdings erheblich. Ferner benötigen insbesondere die in den Druckschriften DE 10 2007 019 064 B3 und DE 10 2009 020 187 A1 beschriebenen Verstellanordnungen einen großen Bauraum.

In Anbetracht der beschriebenen Probleme ist es die Aufgabe der vorliegenden Erfindung, eine wartungs- und montagearme Verstellanordnung für Drehschieber bereitzustellen, mit der die Drehschieber gleichzeitig besonders kompakt angeordnet werden können.

Diese Aufgabe wird erfindungsgemäß durch eine Drehschieberanordnung gemäß Anspruch 1 gelöst, bei welcher die Antriebsradverzahnung in der ersten Drehlage unmittelbar in die Abtriebsradverzahnung eingreift, so dass die Zwischenschaltung eines Übertragungszahnrads zur Kraftübertragung erfindungsgemäß nicht erforderlich ist. Eine Verdrehung des Antriebsrads ausgehend von der ersten Drehlage in einer Verstellrichtung (entweder Uhrzeigersinn oder Gegenuhrzeigersinn) bewirkt somit unmittelbar eine Verdrehung des Abtriebsrads, bis das Ende der Verzahnungsabschnitte in der Umfangsrichtung erreicht ist ("Übergangslage"). Eine weitere Verdrehung des Antriebsrads führt das Abtriebsrad in die Arretierlage, in der das Abtriebsrad auch bei einem Weiterdrehen des Antriebsrads im Wesentlichen stillstehend verbleibt, da die Verzahnungsabschnitte zu diesem Zeitpunkt nicht mehr ineinander eingreifen. Erst wenn das Antriebsrad ausgehend von der Arretierlage entgegen der Verstellrichtung zurückgedreht wird und die Verzahnungsabschnitte wieder ineinander eingreifen, wird das Abtriebsrad zurück in die erste Drehlage verstellt.

Wenn sich das Abtriebsrad in der Arretierlage befindet, kann sich das Antriebsrad um einen bestimmten Winkelbereich im Uhrzeigersinn und im Gegenuhrzeigersinn verdrehen, ohne dass dies eine Verstellung das Abtriebsrads zur Folge hat. Die Arretierlage des Abtriebsrads entspricht deshalb einem Regelbereich des Antriebsrads.

Die Erfindung geht auf die Erkenntnis zurück, dass die herkömmlichen Verstellanordnungen aufgrund des Übertragungszahnrads ein 2-stufiges Getriebe darstellen. 2-stufige Getriebe sind komplex in der Montage und wartungsintensiver als das erfindungsgemäße "einstufige Getriebe", bei dem das Antriebsrad unmittelbar in das Abtriebsrad zu dessen Verstellung eingreift. Aufgrund der einstufigen Ausführung entfallen das Übertragungszahnrad nebst dessen Drehachse sowie die Lagerungen der Achse in einem Gehäuse. Damit reduziert sich neben dem Montage- auch der Teileaufwand. Aufgrund des fehlenden Übertragungszahnrads reduziert sich zudem die Baugröße des Getriebes im Vergleich zu den herkömmlichen Lösungen. Mit anderen Worten wird der beschriebene sequentielle Eingriff (zunächst Verdrehung, dann Arretierung des Abtriebsrads) von nur einer Zahnradstufe ohne zusätzliche Bauteile realisiert.

Unter einem Antriebs- bzw. einem Abtriebsrad wird erfindungsgemäß nicht notwendigerweise ein reguläres Zahnrad o. dgl. verstanden. Vielmehr kann das Antriebsrad Teil eines Drehschiebers oder eines um eine Achse drehbaren Körpers zum Verbinden mit einem Drehschieber sein, der über einen Teilabschnitt in Umfangsrichtung eine Verzahnung (Antriebsradverzahnung) zum Kämmen einer Gegenverzahnung (Abtriebsradverzahnung) aufweist. Ein Beispiel für eine Drehschieberanordnung, bei der das Antriebsrad und das Abtriebsrad Teile von Drehschiebern sind, ist in Fig. 5 dargestellt. Die Verzahnung ist nicht notwendigerweise in Form einer regulären Zahnradverzahnung gebildet. Vielmehr kann die Verzahnung in Form von beliebig geformten, radial oder axial vorstehenden Vorsprüngen gebildet sein, die zum Eingriff in komplementäre Vertiefungen der Gegenverzahnung ausgebildet sind, so dass sie die Vorsprünge der Gegenverzahnung beim Drehen mitnehmen können.

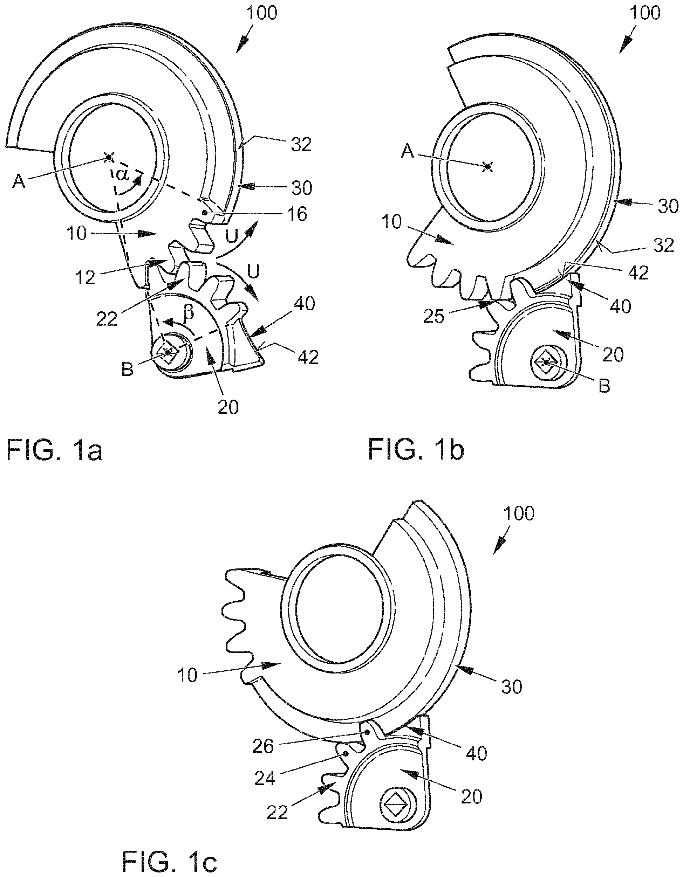

Um Verschleiß, Erwärmung und Geräuschentwicklung beim Kämmen der Räder zu vermindern, sollte jedoch vorzugsweise ein Gleiten der Oberflächen der Zähne aufeinander vermieden werden. Ebenso sollte eine gleichmäßige Bewegungsübertragung gewährleistet bleiben, so dass keine Schädigung der Räder auftritt. Diese Bedingungen erfüllt eine Evolventenverzahnung, wie sie bspw. in Fig. 1 dargestellt ist, bestmöglich, weil durch diese Zahnform die Oberflächen aufeinander abwälzen.

Dabei stehen die einzelnen Zähne der Verzahnungen vorzugsweise in radialer Richtung ausgehend von einer Umfangsfläche nach Art eines Stirnradgetriebes (einstufiges Stirnradgetriebe) vor.

Erfindungsgemäß verläuft die Drehachse des Antriebsrads im Wesentlichen parallel zu der Drehachse des Abtriebsrads, wobei ein gegenseitiger Winkel von etwa 10° noch als im Wesentlichen parallel verstanden wird.

Vorzugsweise entspricht die Anzahl der Zähne der Antriebsradverzahnung im Wesentlichen der Anzahl der Zähne der Abtriebsradverzahnung. Die Anzahl der Zähne kann dabei je nach Bedarf jeweils drei, vier, fünf oder mehr betragen.

Dabei hat es sich als zweckmäßig herausgestellt, dass sich die Antriebsradverzahnung und/oder die Abtriebsradverzahnung über einen Umfangswinkelbereich zwischen 10° und 180°, bevorzugt zwischen 30° und 90°, besonders bevorzugt zwischen 50° und 70°, insbesondere etwa 60° erstrecken. Ein solcher maximaler Verdrehungswinkel des Abtriebsrads hat sich als vorteilhaft erwiesen, wobei gleichzeitig in Umfangsrichtung noch ausreichend Raum für den Regelbereich vorhanden ist.

Um eine Verstellung des Abtriebsrads ausgehend von der Arretierlage bei einer weiteren Verdrehung des Antriebsrads zu verhindern, kann das Abtriebsrad einen sich in Umfangsrichtung an die Abtriebsradverzahnung anschließenden Arretiervorsprung aufweisen, der bevorzugt in Form einer radial nach außen vorstehenden Arretierbacke ausgebildet ist. In der Arretierlage gelangt die Arretierbacke in Anlage an eine Umfangsfläche des Antriebsrads, so dass eine weitere Drehung des Abtriebsrads blockiert wird.

Vorzugsweise weist der Arretiervorsprung eine konkav gekrümmte äußere Fläche auf, deren Krümmungsradius bevorzugt im Wesentlichen einem Krümmungsradius einer konvexen Umfangsfläche des Antriebsrads entspricht. Somit kann das Antriebsrad in der Verstellrichtung weitergedreht werden, wenn sich das Abtriebsrad in der Arretierlage befindet, während seine konvexe Umfangsfläche entlang der konkaven Fläche der Arretierbacke gleitet.

Im Hinblick auf ein zuverlässiges Halten des Abtriebsrads in der Arretierlage kann das Antriebsrad eine sich in Umfangsrichtung an die Antriebsradverzahnung anschließende Ringstufe mit einer konvexen, vorzugsweise im Wesentlichen kreisförmig gekrümmten Umfangsfläche aufweisen, deren Durchmesser bevorzugt größer ist als der Fußkreisdurchmesser der Antriebsradverzahnung. Der Arretiervorsprung kann in der Arretierlage an der Ringstufe anliegen. Die Ringstufe kann sich in der Umfangsrichtung über einen Restbereich des Antriebsrads, in dem keine Antriebsradverzahnung vorhanden ist, erstrecken. Dann befindet sich das Antriebsrad im Regelbereich, wenn die Ringstufe dem Abtriebsrad zugewandt ist.

Unter einer Ringstufe wird ein axial oder radial vorstehender, die Drehachse zumindest abschnittsweise ringartig umlaufender Vorsprung mit einer in der Arretierlage dem Abtriebsrad zugewandten, bevorzugt konvex gekrümmten Umfangsfläche verstanden.

Dabei kann der Außendurchmesser der Ringstufe im Wesentlichen dem Kopfkreisdurchmesser der Antriebsradverzahnung entsprechen. Dies führt zu einem sanften Übergang des Abtriebsrads von der Übergangslage in die Arretierlage und umgekehrt von der Übergangslage zurück in den Verzahnungseingriff, da der letzte Zahn der Antriebsradverzahnung fortlaufend und stufenlos in die Ringstufe übergehen kann, so dass keine Verkantung o.dgl. mit der gegenüberliegenden Abtriebsradverzahnung auftreten kann.

Im Hinblick auf ein vorteilhaftes Verhältnis zwischen der Abmessung des Verzahnungsabschnitts und der Abmessung des Regelbereichs in der Umfangsrichtung hat es sich als sinnvoll erwiesen, dass sich die Ringstufe über einen Umfangswinkel zwischen 60° und 270°, bevorzugt zwischen 120° und 220° erstreckt. Alternativ kann sich die Ringstufe in der Umfangsrichtung über den gesamten Restumfang erstecken, in dem keine Antriebsradverzahnung angeordnet ist, wobei der Restumfang etwa 300° betragen kann.

Dabei kann die Umfangsfläche der Ringstufe in der Arretierlage zur Anlage an einem der Zähne der Abtriebsradverzahnung eingerichtet sein, wodurch eine Rückdrehung des Abtriebsrads in Richtung auf die erste Drehlage verhindert wird. Wenn sich das Abtriebsrad in der Arretierlage befindet, gleitet bei einer Drehung des Antriebsrads die Umfangsfläche der Ringstufe entlang der Zahnflanke dieses Zahns, vorzugsweise des vorletzten oder letzten Zahns der Abtriebsradverzahnung. Die Zahnflanke des vorletzten (oder letzten) Zahns einerseits und eine konkave Fläche des Arretiervorsprungs andererseits, der sich an den letzten Zahn anschließt, können zusammen eine im Wesentlichen konkave Mulde ausbilden, in die die Ringstufe des Antriebsrads in der Arretierlage eingreift. Diese Mulde bildet eine Sicherung zum Verhindern einer Verdrehung des Abtriebsrads ausgehend von der Arretierlage, wenn die Ringstufe in sie eingreift.

Alternativ oder zusätzlich ist zumindest einer der Zähne der Abtriebsradverzahnung, bevorzugt der letzte Zahn in Umfangsrichtung, in axialer Richtung schmaler ausgebildet als der in Umfangsrichtung vorletzte Zahn, um einen Freiraum zur Aufnahme der Ringstufe in der Arretierlage hinter diesem Zahn bereitzustellen. Dies führt dazu, dass die oben beschriebene Mulde nicht durch den konkav vorstehenden letzten Zahn unterbrochen wird.

In einer besonders bevorzugten Ausführungsform der Erfindung liegt in der Arretierlage die Umfangsfläche der Ringstufe zum einen an dem Arretiervorsprung des Abtriebsrads an und verhindert damit eine weitere Verdrehung des Abtriebsrads, und sie liegt zum anderen an der Zahnflanke des vorletzten Zahns der Abtriebsradverzahnung an und verhindert damit eine Rückdrehung des Abtriebsrads, wobei der letzte Zahn vorzugsweise schmaler ausgebildet ist als der vorletzte Zahn.

Wenn das Antriebsrad aus dem Regelbereich heraus in einer Rückstellrichtung (entgegen der Stellrichtung) rotiert und wiederum die Übergangslage erreicht, in der die Ringstufe endet und die Antriebsradverzahnung beginnt, wird der Eingriff zwischen der Antriebsradverzahnung und der Abtriebsradverzahnung mittels des letzten Zahns der Abtriebsradverzahnung wieder hergestellt und das Abtriebsrad kann in die erste Drehlage zurückgedreht werden.

In einer alternativen Ausführungsform der Erfindung weist das Antriebsrad eine zweite Ringstufe mit einer kreisförmig gekrümmten Umfangsfläche zur Anlage an dem sich an die Abtriebsradverzahnung in Umfangsrichtung anschließenden Arretiervorsprung auf. Zusätzlich kann die Zahnflanke des bevorzugt letzten oder vorletzten Zahns der Abtriebsradverzahnung zur Anlage an der Umfangsfläche der (ersten) Ringstufe eingerichtet sein.

In diesem Fall hat es sich als zweckmäßig erwiesen, dass der Durchmesser der zweiten Ringstufe kleiner ist als der Durchmesser der ersten Ringstufe, wobei bevorzugt der Arretiervorsprung radial weiter von dem Abtriebsrad vorsteht als die Abtriebsradverzahnung. Die Umfangsfläche der zweiten Ringstufe kann sich axial und radial versetzt an die Umfangsfläche der ersten Ringstufe anschließen. Vorzugsweise entspricht der Durchmesser der inneren Ringstufe im Wesentlichen dem Fußkreisdurchmesser der Antriebsradverzahnung und der Durchmesser der äußeren Ringstufe im Wesentlichen dem Kopfkreisdurchmesser der Antriebsradverzahnung. Dadurch wird die Herstellung des Antriebsrads vereinfacht.

In einer alternativen Ausführungsform der Erfindung kann die Abfolge des Verzahnungsbereichs und des Regelbereichs in Umfangsrichtung vertauscht sein und/oder die Verstellrichtung zum Verstellen des Abtriebsrads von der ersten Drehlage in die Arretierlage kann umgekehrt sein.

Vorzugsweise ist das Antriebsrad durch einen Stellmotor mit umkehrbarer Drehrichtung antreibbar, wobei durch die Umkehrung der Drehrichtung des Antriebsrads das Abtriebsrad von der Arretierlage über die Übergangslage zurück in die erste Drehlage verstellbar ist. Je nach Bedarf können die Durchmesser von Antriebsrad und Abtriebsrad unterschiedlich groß sein.

Eine erfindungsgemäße Drehschieberanordnung kann insbesondere für einen mehrere Zweige aufweisenden Kühlmittelkreislauf einer Brennkraftmaschine vorgesehen sein.

Die Erfindung wird im Folgenden anhand der Zeichnung näher erläutert. Diese zeigt in
- Fig. 1: eine erste Ausführungsform einer Verstellanordnung einer erfindungsgemäßen Drehschieberanordnung mit dem Abtriebsrad in der ersten Drehlage (Fig. 1a), in einer Übergangslage (Fig. 1b) und in der Arretierlage (Fig. 1c),
- Fig. 2: eine zweite Ausführungsform einer Verstellanordnung einer erfindungsgemäßen Drehschieberanordnung von schräg vorne (Fig. 2a) und von schräg hinten (Fig. 2b), jeweils mit dem Abtriebsrad in der ersten Drehlage,
- Fig. 3: die zweite Ausführungsform der Verstellanordnung von schräg vorne (Fig. 3a) und von schräg hinten (Fig. 3b), jeweils mit dem Abtriebsrad in der Übergangslage,
- Fig. 4: die zweite Ausführungsform der Verstellanordnung von schräg vorne (Fig. 4a) und von schräg hinten (Fig. 4b), jeweils mit dem Abtriebsrad in der Arretierlage, und
- Fig. 5: eine Verstellanordnung aus dem Stand der Technik.

In Figur 1 ist eine erste Ausführungsform einer Verstellanordnung 100 einer erfindungsgemäßen Drehschieberanordnung mit einem Antriebsrad 10 und einem von dem Antriebsrad 10 getriebenen Abtriebsrad 20 dargestellt. Das Antriebsrad 10 ist um eine erste Drehachse A drehbar gelagert, und das Abtriebsrad 20 ist um eine zweite Drehachse B drehbar gelagert, die parallel zu der ersten Drehachse A verläuft. Das Antriebsrad 10 weist eine als Evolventenverzahnung ausgeführte Antriebsradverzahnung 12 auf, die sich über einen Umfangswinkelbereich (α) von etwa 60° erstreckt, und das Abtriebsrad 20 weist eine ebenfalls als Evolventenverzahnung ausgeführte Abtriebsradverzahnung 22 auf, die sich über einen Umfangswinkelbereich von etwa 60° (β) erstreckt. Das Antriebsrad 10 kann mit einer Antriebeinheit wie etwa einem Stellmotor verbunden sein, der das Antriebsrad um vorgegebene Winkelmaße im Uhrzeigersinn sowie im Gegenuhrzeigersinn drehen kann.

Mit dem Antriebsrad 10 ist vorzugsweise ein erster Drehschieber (nicht dargestellt) verbunden bzw. einteilig damit ausgeführt, und mit dem Abtriebsrad 20 ist vorzugsweise ein zweiter Drehschieber (nicht dargestellt) verbunden bzw. einteilig damit ausgeführt.

Andere Arten von Verzahnungen und andere Umfangswinkelbereiche sind gleichermaßen möglich.

In der in Fig. 1a dargestellten ersten Drehlage (Startposition) des Abtriebsrads 10 greift die Antriebsradverzahnung 12 unmittelbar und ohne Zwischenschaltung einer zweiten Getriebestufe in die Abtriebsradverzahnung 22 ein. Bei einer Drehung des Antriebsrads 10 im Uhrzeigersinn wird das Abtriebsrad aufgrund des Zahneingriffs mitgenommen, so dass es sich im Gegenuhrzeigersinn bis in die in Fig. 1b dargestellte Übergangslage verdreht.

Das Antriebsrad 10 verfügt entlang seines Umfangs in Verlängerung des verzahnten Bereichs eine Ringstufe 30 mit einer ringförmig gekrümmten Umfangsfläche 32, die sich über einen Umfangswinkelbereich von mehr als 180° erstreckt. Wenn die Ringstufe 30 dem Abtriebsrad 20 gegenüberliegt, befindet sich das Antriebsrad 10 in einem Regelbereich, in dem der mit dem Antriebsrad 10 verbundene Drehschieber bei stationär gehaltenem zweiten Drehschieber verstellt bzw. geregelt werden kann.

Der letzte Zahn 16 der Antriebsradverzahnung 12 geht in Umfangsrichtung U ohne Zwischenraum in die Ringstufe 30 über, wobei der Kopfkreisdurchmesser der Antriebsradverzahnung 12 dem äußeren Durchmesser der Ringstufe 30 entspricht, so dass in radialer Richtung keine Stufe zwischen der Ringstufe 30 und dem Zahnkopf vorhanden ist. Die axiale Breite der Ringstufe 30 ist kleiner als die Breite der Zähne, so dass die Ringstufe 30 durch Anlage an einem der Zähne der Abtriebsradverzahnung 22 eine Rückdrehung des Abtriebsrads 20 verhindert und so als Haltemechanismus wirkt, wie unten noch näher erläutert wird.

Der Umfangsbereich der Verzahnungsabschnitte und der Umfangsbereich der Ringstufe 30 können sich aus dem konkreten Anwendungsfall ergeben.

Das Abtriebsrad 20 verfügt entlang seines Umfangs in Verlängerung des verzahnten Bereichs über einen Arretiervorsprung 40 in Form einer radial nach außen vorstehenden Arretierbacke. Der Arretiervorsprung 40 weist eine konkav gekrümmte Fläche 42 auf, die sich dem Antriebsrad 10 zuwendet, wenn das Abtriebsrad 20 in die oben beschriebene Übergangslage gedreht wird. In der Übergangslage (Fig. 1b) liegt die Arretierbacke des Abtriebsrads 20 an der Umfangsfläche 32 der Ringstufe 30 an, wobei der Krümmungsradius der konkaven Anlagefläche 42 des Arretiervorsprungs 40 dem Krümmungsradius der konvexen Umfangsfläche der Ringstufe 30 im Betrag entspricht. Rotiert das Antriebsrad 10 jetzt weiter im Uhrzeigersinn, gleitet der letzte Zahn 16 des Antriebsrads 10 aus der Abtriebsradverzahnung 22 heraus, und die Arretierlage wird erreicht, die in Fig. 1c dargestellt ist.

In der Arretierlage gleitet die Ringstufe 30 des Antriebsrads 10 entlang der konkaven Fläche 42 des Arretiervorsprungs 40 sowie in der letzten Verzahnungslücke der Abtriebsradverzahnung 22 in Umfangsrichtung U ab. Dadurch kann das Antriebsrad 10 eine wechselnde Rotation für eine Regelfunktion ausüben, während das Abtriebsrad 20 in der Arretierlage arretiert ist.

Eine Rückdrehung des Abtriebsrads 20 aus der Arretierlage heraus in die Startposition wird verhindert, wenn die Ringstufe 30 an der Zahnflanke 25 des vorletzten Zahns 24 der Abtriebsradverzahnung 22 anliegt. Der letzte Zahn 26 der Abtriebsradverzahnung 22 ist dagegen in Axialrichtung schmaler ausgebildet als der vorletzte Zahn 24, so dass die Ringstufe 30 in der Arretierlage in dem Freiraum hinter dem letzten Zahn 26 aufnehmbar ist. Somit befindet sich hinter dem letzten Zahn 26 der Boden einer konkaven Mulde, in die die Ringstufe 30 in der Arretierlage eingreift. Der letzte Zahn 26 der Abtriebsradverzahnung 22 steht dabei in axialer Richtung neben dem Startabschnitt der Arretierbacke.

Rotiert das Antriebsrad 10 aus dem Regelbereich im Gegenuhrzeigersinn heraus und erreicht wieder die in Fig. 1b dargestellte Übergangslage, wird die Verzahnung wieder hergestellt und das Abtriebsrad 20 kann in die Startposition der Fig. 1a zurückgedreht werden.

Damit kann der beschriebene sequentielle Eingriff bei parallelen Drehachsen von nur einer Getriebestufe ohne zusätzliche Bauteile realisiert werden.

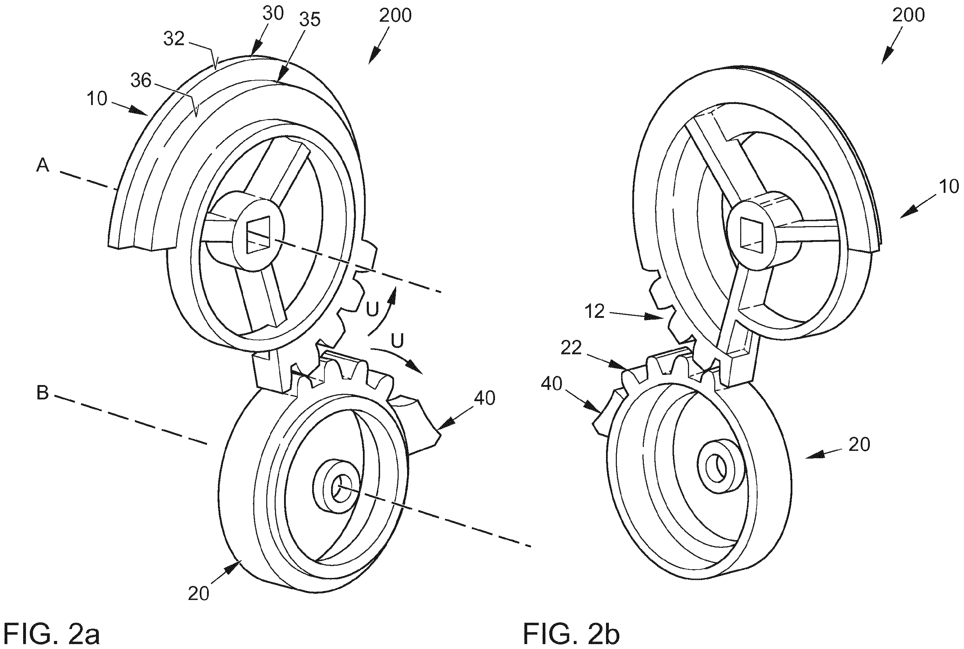

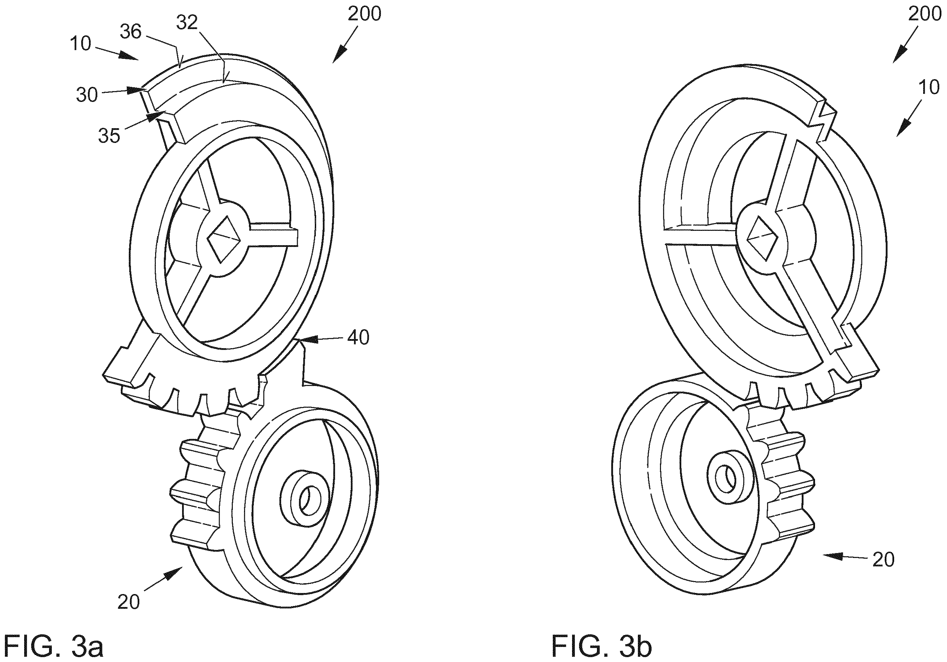

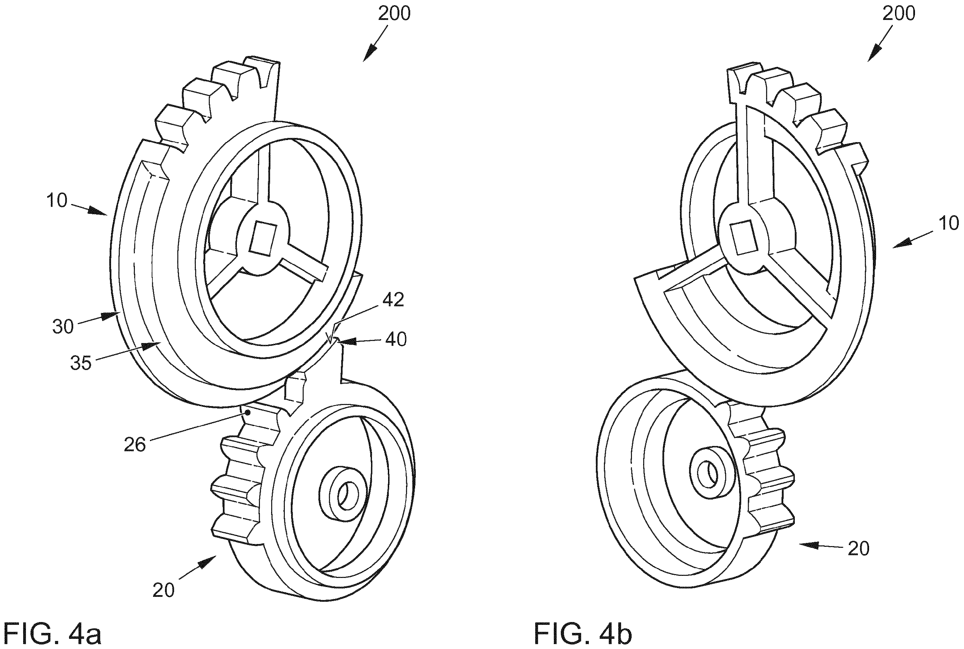

In den Figuren 2 bis 4 ist eine alternative Ausführungsform der Erfindung dargestellt, die im Wesentlichen der oben erläuterten Verstellanordnung 100 entspricht, so dass dieselben Bezugszeichen verwendet werden. In Fig. 2 ist die oben erläuterte erste Drehlage des Abtriebsrads 20 dargestellt, in Fig. 3 die Übergangslage und in Fig. 4 die Arretierlage.

Die Verstellanordnung 200 gemäß der zweiten Ausführungsform weist (ebenso wie die erste Ausführungsform) neben der ersten Ringstufe 30 eine zweite Ringstufe 35 mit einem kleineren Außendurchmesser als die erste Ringstufe 30 auf. Die Umfangsfläche 36 der zweiten Ringstufe 35 ist axial und radial versetzt neben der Umfangsfläche 32 der ersten Ringstufe 30 angeordnet, wobei ihr Durchmesser im Wesentlichen dem Fußkreisdurchmesser der Antriebsradverzahnung 12 entspricht.

Der Arretiervorsprung 40, der sich in der Umfangsrichtung U an die Abtriebsradverzahnung 22 anschließt, steht bei der Verstellanordnung 200 anders als bei der Verstellanordnung 100 radial weiter vor als die Abtriebsradverzahnung 22, so dass er in der Übergangslage (Fig. 3) in Anlage an die Umfangsfläche 36 der zweiten Ringstufe 35 kommt. In der in Fig. 4 dargestellten Arretierlage liegt die konkav gekrümmte Außenfläche 42 des Arretiervorsprungs 40 eng an der konvex gekrümmten Umfangsfläche 36 der zweiten Ringstufe 35 an, so dass ein Weiterdrehen des Abtriebsrads 20 im Gegenuhrzeigersinn verhindert wird, wenn die Umfangsfläche 36 der zweiten Ringstufe 35 bei einem Weiterdrehen des Antriebsrads 10 im Uhrzeigersinn entlang der konkaven Fläche 42 des Arretiervorsprungs 40 gleitet. Der Krümmungsradius der konkaven Fläche 42 des Arretiervorsprungs 40 entspricht dabei im Wesentlichen dem Krümmungsradius der Umfangsfläche 36 der zweiten Ringstufe 30.

Gleichzeitig liegt in der Arretierlage die Zahnflanke des letzten Zahns 26 der Abtriebsradverzahnung 22 an der ersten Ringstufe 30 an. Durch das Zusammenwirken der beiden Ringstufen 30, 35 einerseits und des letzten Zahns 26 sowie des Arretiervorsprungs 40, die zusammen eine im Wesentlichen konkave Mulde bilden, andererseits wird das Abtriebsrad 20 in der Arretierlage gehalten, wenn das Antriebsrad 10 im Regelbereich rotiert. Eine Rückdrehung des Abtriebsrads 20 in die Startposition (Fig. 2) erfolgt, indem das Antriebsrad 10 zunächst im Gegenuhrzeigersinn gedreht wird, bis die in Fig. 3 gezeigt Übergangslage erreicht ist und die Verzahnungen 12, 22 wieder ineinander eingreifen. Ab diesem Zeitpunkt verlässt das Abtriebsrad 20 die Haltestellung und wird von dem Antriebsrad 10 in die Startposition mitgenommen.

### Bezugszeichenliste

- 10: Antriebsrad
- 12: Antriebsradverzahnung
- 16: letzter Zahn der Antriebsradverzahnung
- 20: Abtriebsrad
- 22: Abtriebsradverzahnung
- 24: vorletzter Zahn der Abtriebsradverzahnung
- 25: Zahnflanke
- 26: letzter Zahn der Abtriebsradverzahnung
- 30: (erste) Ringstufe
- 32: Umfangsfläche der (ersten) Ringstufe
- 35: zweite Ringstufe
- 36: Umfangsfläche der zweiten Ringstufe
- 40: Arretiervorsprung
- 42: Fläche des Arretiervorsprungs
- 50: treibendes Rad
- 51: getriebenes Rad
- 52: Zwischenzahnrad
- 55, 56: Verzahnungen
- 100: Verstellanordnung
- 200: Verstellanordnung
- A: Drehachse des Antriebsrads
- B: Drehachse des Abtriebsrads
- U: Umfangsrichtung
- α: Umfangswinkelbereich der Antriebsradverzahnung
- β: Umfangswinkelbereich der Abtriebsradverzahnung

## Patentansprüche

1. Drehschieberanordnung mit einer Verstellanordnung (100, 200), die ein um eine erste Drehachse (A) drehbares, mit einer Antriebsradverzahnung (12) versehenes Antriebsrad (10) zum Antreiben eines um eine parallel oder mit einem Winkel gleich oder kleiner als 10° zu der ersten Drehachse (A) verlaufende zweite Drehachse (B) drehbaren, mit einer Abtriebsradverzahnung (22) versehenen Abtriebsrads (20), wobei das Antriebsrad (10) mit einem ersten Querschnittsverstellglied eines ersten Drehschiebers verbunden ist und das Abtriebsrad (20) mit einem zweiten Querschnittsverstellglied eines zweiten Drehschiebers verbunden ist und wobei sich die Verzahnungen (12, 22) in Umfangsrichtung (U) jeweils nur über einen Teilwinkelbereich erstrecken, **dadurch gekennzeichnet, dass** durch eine Verdrehung des Antriebsrads (10) das Abtriebsrad (20) von einer ersten Drehlage, in der die Verzahnungen (12, 22) unmittelbar und ohne Zwischenschaltung einer zweiten Getriebestufe zur Kraftübertragung ineinander eingreifen, in eine Arretierlage verstellbar ist, in der das Abtriebsrad (20) bei einer weiteren Verdrehung des Antriebsrads (10) gehalten ist.

2. Drehschieberanordnung nach Anspruch 1, **dadurch gekennzeichnet, dass** sich die Antriebsradverzahnung (12) und/oder die Abtriebsradverzahnung (22) über einen Umfangswinkelbereich (α, β) zwischen 10° und 180°, bevorzugt zwischen 30° und 90°, insbesondere zwischen 50° und 70° erstrecken.

3. Drehschieberanordnung nach einem der vorhergehenden Ansprüche, **dadurch gekennzeichnet, dass** das Abtriebsrad (20) einen sich in Umfangsrichtung (U) an die Abtriebsradverzahnung (22) anschließenden Arretiervorsprung (40) bevorzugt in Form einer radial nach außen vorstehenden Arretierbacke aufweist, der in der Arretierlage die weitere Verdrehung des Abtriebsrads durch Anlage an dem Antriebsrad (10) verhindert.

4. Drehschieberanordnung nach Anspruch 3, **dadurch gekennzeichnet, dass** der Arretiervorsprung (40) eine konkav gekrümmte äußere Fläche (42) aufweist, deren Krümmungsradius bevorzugt im Wesentlichen einem Krümmungsradius einer Umfangsfläche (32) des Antriebsrads (10) entspricht.

5. Drehschieberanordnung nach Anspruch 3 oder 4, **dadurch gekennzeichnet, dass** das Antriebsrad (10) eine sich in Umfangsrichtung (U) an die Antriebsradverzahnung (12) anschließende Ringstufe (30) mit einer konvex gekrümmten Umfangsfläche (32) aufweist, deren Durchmesser bevorzugt größer ist als der Fußkreisdurchmesser der Antriebsradverzahnung (12).

6. Drehschieberanordnung nach Anspruch 5, **dadurch gekennzeichnet, dass** der Außendurchmesser der Ringstufe (30) im Wesentlichen dem Kopfkreisdurchmesser der Antriebsradverzahnung (12) entspricht.

7. Drehschieberanordnung nach Anspruch 5 oder 6, **dadurch gekennzeichnet, dass** sich die Ringstufe (30) über einen Umfangswinkel zwischen 60° und 270°, bevorzugt zwischen 120° und 220° erstreckt.

8. Drehschieberanordnung nach einem der Ansprüche 5 bis 7, **dadurch gekennzeichnet, dass** die Umfangsfläche (32) der Ringstufe (30) in der Arretierlage zur Anlage an einem der Zähne (24) der Abtriebsradverzahnung (22) eingerichtet ist, um eine Rückdrehung des Abtriebsrads (20) in Richtung auf die erste Drehlage zu verhindern.

9. Drehschieberanordnung nach Anspruch 8, **dadurch gekennzeichnet, dass** die Umfangsfläche (32) der Ringstufe (30) in der Arretierlage zur Anlage an der Zahnflanke (25) des vorletzten Zahns (24) oder des letzten Zahns (26) des Abtriebsrads (20) in Umfangsrichtung (U) eingerichtet ist.

10. Drehschieberanordnung nach einem der Ansprüche 5 bis 9, **dadurch gekennzeichnet, dass** zumindest einer der Zähne der Abtriebsradverzahnung (20), bevorzugt der letzte Zahn (26) in Umfangsrichtung (U), in axialer Richtung schmaler ausgebildet ist als ein diesem Zahn (26) benachbarter Zahn (25), um einen Freiraum zur Aufnahme der Ringstufe (30) in der Arretierlage bereitzustellen.

11. Drehschieberanordnung nach einem der Ansprüche 5 bis 10, **dadurch gekennzeichnet, dass** in der Arretierlage die Umfangsfläche (32) der Ringstufe (30) zum einen an dem Arretiervorsprung des Abtriebsrads anliegt und damit eine weitere Verdrehung des Abtriebsrads verhindert und zum anderen an der Zahnflanke eines Zahns der Abtriebsradverzahnung anliegt und damit eine Rückdrehung des Abtriebsrads verhindert.

12. Drehschieberanordnung nach einem der Ansprüche 5 bis 10, **dadurch gekennzeichnet, dass** das Antriebsrad (10) eine zweite Ringstufe (35) mit einer kreisförmig gekrümmten Umfangsfläche (36) zur Anlage an dem sich an die Abtriebsradverzahnung (22) in Umfangsrichtung (U) anschließenden Arretiervorsprung (40) aufweist.

13. Drehschieberanordnung nach Anspruch 12, **dadurch gekennzeichnet, dass** der Durchmesser der zweiten Ringstufe (35) kleiner ist als der Durchmesser der ersten Ringstufe (30), und dass bevorzugt der Arretiervorsprung (40) in radialer Richtung weiter von dem Abtriebsrad (20) vorsteht als die Abtriebsradverzahnung (22).

## Claims

1. Rotary valve arrangement having an adjustment system (100, 200) which has a drive wheel (10) provided with a drive wheel toothing (12) and rotatable about a first axis of rotation (A) in order to drive a driven wheel (20) provided with a driven wheel toothing (22) and rotatable about a second axis of rotation (B) running parallel or at an angle of equal to or less than 10° to the first axis of rotation (A), the drive wheel (10) being connected to a first cross-sectional adjustment element of a first rotary valve and the driven wheel (20) being connected to a second cross-sectional adjustment element of a second rotary valve, and the toothing systems (12, 22) in each case extending only over a defined angular span in a circumferential direction (U), **characterized in that** by a rotation of the drive wheel (10) the driven wheel (20) can be adjusted from a first rotational position, in which the toothing systems (12, 22) intermesh directly and without the interposition of a second transmission step for transmitting the force, into an arresting position, in which the driven wheel (20) is held in the event of a further rotation of the drive wheel (10).

2. Rotary valve arrangement according to Claim 1, **characterized in that** the drive wheel toothing (12) and/or the driven wheel toothing (22) extend over a circumferential angular span (α, β) of between 10° and 180°, preferably between 30° and 90°, in particular between 50° and 70°.

3. Rotary valve arrangement according to one of the preceding claims, **characterized in that** the driven wheel (20) comprises an arresting projection (40), which adjoins the driven wheel toothing (22) in a circumferential direction (U) and which preferably takes the form of an arresting flange projecting radially outwards, which in the arresting position prevents further rotation of the driven wheel by bearing on the drive wheel (10).

4. Rotary valve arrangement according to Claim 3, **characterized in that** the arresting projection (40) comprises a concavely curved outer face (42), the radius of curvature of which substantially corresponds to a radius of curvature of a circumferential face (32) of the drive wheel (10).

5. Rotary valve arrangement according to Claim 3 or 4, **characterized in that** the drive wheel (10) comprises an annular step (30), adjoining the drive wheel toothing (12) in a circumferential direction (U) and having a convexly curved circumferential face (32), the diameter of which is preferably greater than the root diameter of the drive wheel toothing (12).

6. Rotary valve arrangement according to Claim 5, **characterized in that** the outside diameter of the annular step (30) substantially corresponds to the tip diameter of the drive wheel toothing (12).

7. Rotary valve arrangement according to Claim 5 or 6, **characterized in that** the annular step (30) extends over a circumferential angle of between 60° and 270°, preferably between 120° and 220°.

8. Rotary valve arrangement according to one of Claims 5 to 7, **characterized in that** in the arresting position the circumferential face (32) of the annular step (30) is adapted to bear against one of the teeth (24) of the driven wheel toothing (22) in order to prevent the driven wheel (20) from turning back towards the first rotational position.

9. Rotary valve arrangement according to Claim 8, **characterized in that** in the arresting position the circumferential face (32) of the annular step (30) is adapted to bear against the tooth flank (25) of the penultimate tooth (24) or the last tooth (26) of the driven wheel (20) in a circumferential direction (U).

10. Rotary valve arrangement according to one of Claims 5 to 9, **characterized in that** at least one of the teeth of the driven wheel toothing (20), preferably the last tooth (26) in a circumferential direction (U), is formed narrower in an axial direction than a tooth (25) adjacent to this tooth (26), in order to provide a void in which to receive the annular step (30) in the arresting position.

11. Rotary valve arrangement according to one of Claims 5 to 10, **characterized in that** in the arresting position the circumferential face (32) of the annular step (30) bears firstly against the arresting projection of the driven wheel, thereby preventing a further rotation of the driven wheel, and secondly against the tooth flank of a tooth of the driven wheel toothing, thereby preventing the driven wheel from turning back.

12. Rotary valve arrangement according to one of Claims 5 to 10, **characterized in that** the drive wheel (10) comprises a second annular step (35) having a circularly curved circumferential face (36), designed to bear against the arresting projection (40) adjoining the driven wheel toothing (22) in a circumferential direction (U).

13. Rotary valve arrangement according to Claim 12, **characterized in that** the diameter of the second annular step (35) is smaller than the diameter of the first annular step (30), and that the arresting projection (40) preferably protrudes further from the driven wheel (20) in a radial direction than the driven wheel toothing (22).

## Revendications

1. Agencement de vanne rotative avec un dispositif d'actionnement (100, 200), qui comprend une roue menante (10) munie d'une denture de roue menante (12) et pouvant tourner autour d'un premier axe de rotation (A) destinée à entraîner une roue menée (20) munie d'une denture de roue menée (22) et pouvant tourner autour d'un deuxième axe de rotation (B) s'étendant parallèlement ou avec un angle égal ou inférieur à 10° par rapport au premier axe de rotation (A), dans lequel la roue menante (10) est reliée à un premier organe de réglage de section transversale d'une première vanne rotative et la roue menée (20) est reliée à un deuxième organe de réglage de section transversale d'une deuxième vanne rotative et dans lequel les dentures (12, 22) ne s'étendent en direction périphérique (U) respectivement que sur une zone angulaire partielle, **caractérisé en ce que** par une rotation de la roue menante (10) la roue menée (20) peut être déplacée d'une première position angulaire, dans laquelle les dentures (12, 22) engrènent l'une dans l'autre directement et sans interposition d'un deuxième étage d'engrenage pour la transmission de force, à une position d'arrêt, dans laquelle la roue menée (20) est maintenue jusqu'à une nouvelle rotation de la roue menante (10).

2. Agencement de vanne rotative selon la revendication 1, **caractérisé en ce que** la denture de roue menante (12) et/ou la denture de roue menée (22) s'étendent sur une zone angulaire périphérique (α, β) comprise entre 10° et 180°, de préférence entre 30° et 90°, en particulier entre 50° et 70°.

3. Agencement de vanne rotative selon l'une quelconque des revendications précédentes, **caractérisé en ce que** la roue menée (20) présente une saillie d'arrêt (40), de préférence sous la forme d'une mâchoire d'arrêt saillante radialement vers l'extérieur, se raccordant en direction périphérique (U) à la denture de roue menée (22), qui dans la position d'arrêt empêche la nouvelle rotation de la roue menée par appui sur la roue menante (10).

4. Agencement de vanne rotative selon la revendication 3, **caractérisé en ce que** la saillie d'arrêt (40) présente une face extérieure à courbure concave (42), dont le rayon de courbure correspond de préférence essentiellement à un rayon de courbure d'une face périphérique (32) de la roue menante (10).

5. Agencement de vanne rotative selon la revendication 3 ou 4, **caractérisé en ce que** la roue menante (10) présente un gradin annulaire (30) se raccordant en direction périphérique (U) à la denture de roue menante (12), avec une face périphérique à courbure convexe (32), et dont le diamètre est de préférence plus grand que le diamètre du cercle de pied de la denture de roue menante (12) .

6. Agencement de vanne rotative selon la revendication 5, **caractérisé en ce que** le diamètre extérieur du gradin annulaire (30) correspond essentiellement au diamètre du cercle de tête de la denture de roue menante (12).

7. Agencement de vanne rotative selon la revendication 5 ou 6, **caractérisé en ce que** le gradin annulaire (30) s'étend sur un angle périphérique compris entre 60° et 270°, de préférence entre 120° et 220°.

8. Agencement de vanne rotative selon l'une quelconque des revendications 5 à 7, **caractérisé en ce que** la face périphérique (32) du gradin annulaire (30) est conçue pour s'appliquer dans la position d'arrêt sur une des dents (24) de la denture de roue menée (22), afin d'empêcher une rotation inverse de la roue menée (20) en direction de la première position angulaire.

9. Agencement de vanne rotative selon la revendication 8, **caractérisé en ce que** la face périphérique (32) du gradin annulaire (30) est conçue pour s'appliquer dans la position d'arrêt sur le flanc de dent (25) de l'avant-dernière dent (24) ou de la dernière dent (26) de la roue menée (20) dans la direction périphérique (U).

10. Agencement de vanne rotative selon l'une quelconque des revendications 5 à 9, **caractérisé en ce qu'**au moins une des dents de la denture de roue menée (20), de préférence la dernière dent (26) en direction périphérique (U), est plus étroite en direction axiale qu'une dent (25) voisine de cette dent (26), afin de procurer un espace libre destiné à contenir le gradin annulaire (30) dans la position d'arrêt.

11. Agencement de vanne rotative selon l'une quelconque des revendications 5 à 10, **caractérisé en ce que** la face périphérique (32) du gradin annulaire (30) dans la position d'arrêt s'applique d'une part sur la saillie d'arrêt de la roue menée et dès lors empêche une nouvelle rotation de la roue menée et d'autre part sur le flanc de dent d'une dent de la denture de roue menée et dès lors empêche une rotation inverse de la roue menée.

12. Agencement de vanne rotative selon l'une quelconque des revendications 5 à 10, **caractérisé en ce que** la roue menante (10) présente un deuxième gradin annulaire (35) avec une face périphérique à courbure circulaire (36) destinée à l'appui sur la saillie d'arrêt (40) se raccordant à la denture de roue menée (22) en direction périphérique (U).

13. Agencement de vanne rotative selon la revendication 12, **caractérisé en ce que** le diamètre du deuxième gradin annulaire (35) est plus petit que le diamètre du premier gradin annulaire (30), et **en ce que** la saillie d'arrêt (40) est de préférence plus saillante en direction radiale sur la roue menée (20) que la denture de roue menée (22).
